Europäisches Patentamt

European Patent Office

Office européen des brevets

(19)

(11) Publication number: **0 444 847 A2**

(12) **EUROPEAN PATENT APPLICATION**

(21) Application number: **91301491.6**

(22) Date of filing: **25.02.91**

(51) Int. Cl.$^5$: **G06F 15/324**

(30) Priority: **26.02.90 US 485336**

(43) Date of publication of application:
**04.09.91 Bulletin 91/36**

(84) Designated Contracting States:
**DE FR GB IT**

(71) Applicant: **International Business Machines Corporation**
**Old Orchard Road**
**Armonk, N.Y. 10504 (US)**

(72) Inventor: **Toney, Edward Vincent**
**405 Concord Avenue**
**Exton, Pennsylvania 19341 (US)**

(74) Representative: **Killgren, Neil Arthur**
**IBM United Kingdom Limited Intellectual**
**Property Department Hursley Park**
**Winchester Hampshire SO21 2JN (GB)**

(54) **Enhanced processor for linear recurrences.**

(57) The performance of a data processing system in determining the values of recurrence variables in a set of equations which define a linear recurrence of any order is enhanced by dividing said set of equations into groups of consecutive equations, determining temporary (or parallel) values, for each group, of the recurrence variables with those recurrence variables which are derived from equations in the next preceding group being set to zero,

**M$^{TH}$ ORDER LINEAR RECURRENCE:**

$$x_i = \sum_{j=i-m}^{i-1} a_{ij} x_j \quad + b_i$$

## FIG. 1A

**1$^{ST}$ ORDER:**

$$x_1 = \qquad b_1$$
$$x_2 = a_2 x_1 \quad + b_2$$
$$x_3 = a_3 x_2 \quad + b_3$$
$$\vdots$$
$$x_i = a_i x_{i-1} \quad + b_i$$
$$\vdots$$
$$x_N = a_N x_{N-1} \quad + b_N$$

## FIG. 1B (PRIOR ART)

EP 0 444 847 A2

## ENHANCED PROCESSOR FOR LINEAR RECURRENCES

This invention relates to enhancing the performance of data processing systems in handling linear recurrences.

In general, computation time for arithmetic problems in a data processing system is a function of the number of equations to be solved and the number of processors available to receive and process information. Linear recurrences have the characteristic that their solution involves obtaining a number of intermediate solutions $x_1, x_2 -- x_w$. this may heretofore be done serially where $x_1$ is solved, then $x_2$ is solved by plugging in $x_1$ from the previous equation, and then solving $x_3$ by plugging in $x_2$, etc, clearing a time consuming operation.

Another approach for solving a first order linear recurrence of length N, is attributed to the Computing Research Group at the Lawrence Livermore Laboratories. This technique, which requires approximately 1.5 $Nlog_2N$ arithmetic operations to solve the first order linear recurrence of length N, offers a vector operation count of $3 log_2N$ and is referred to as Recursive Doubling. WIile offering some time saving over the straightforward serial approach, recursive doubling is still very demanding in terms of computing time.

It is accordingly an object of the invention to enhance the performance of a data processing system in handling linear recurrences.

According to the invention we provide a method of operating a data processing system to determine the values of recurrence variables in a set of equations which define a linear recurrence of any order comprising the steps of

(a) operating the processing system under program control to divide said set of equations into groups of consecutive equations,

(b) operating at least one processor element of the system to determine temporary values, for each group, of the recurrence variables with those recurrence variables which are derived from equations in the next proceeding group being set to zero,

(c) operating at least one processor element to determine for each equation values of the coefficients for those recurrence variables which were set to zero,

(d) operating at least one processor element to determine the final value of said recurrence variables which were set to zero,

(e) operating at least one processor element to determine the final values of previously unsolved recurrence variables, and

(f) storing each of the determined values in system memory after each respective determining step.

We further provide a data processing system for determining the values of recurrence variables in a set of sequential recurrence variable equations which define a linear recurrence of any order, said system including a processor adapted under program control to

(a) divide the set of sequential recurrence variable equations into a further plurality of groups of sequential equations;

(b) solve, for each said group, sub-recurrence subsets, with recurrence variables appearing but not defined in each said group being taken as zero;

(c) develop coefficients for each equation in each said group as a function of the recurrence variable coefficients of previous equations of said group with external coefficients taken as zero;

(d) compute, in sequence, final values of said recurrence variables which were taken as zero;

(e) multiply a recurrence variable so computed by a coefficient so developed and add the product to a corresponding sub-recurrence value from said subconcurrence subsets.

In order that the invention may be well understood a preferred embodiment thereof will now be described with reference to the accompanying drawings, in which:

Fig. 1A shows an Mth order linear recurrence to which the linear recurrence dispersal technique of the instant invention proposes an expeditious solution.

Fig. 1B shows a first order linear recurrence expressed as N recurrence variables to be solved.

Fig. 2 shows a second order linear recurrence expressed similarly to the first order linear recurrence of Fig. 1B.

Fig. 3 depicts an Mth order linear recurrence.

Fig. 4A shows a set of first order linear recurrence equations broken up into G groups of four equations in each group, setting forth the phase 1 and phase 2 steps of the linear recurrence dispersal method.

Fig. 4B illustrates the phase 3 through 5 calculations of the instant invention for the first order recurrence of Fig. 4A.

Fig. 5A shows a set of second order linear recurrence equations broken up into G groups of four equations per group and showing the phase 1 and phase 2 steps of the linear recurrence dispersal method.

Fig. 5B illustrates how the coefficients $C_{6,1}$ and $C_{6,2}$ and $X_{6T}$ are formed in the phase 3 calculation of the instant invention for the second order recurrence of Fig. 5A.

Fig. 5C shows a generalised phase 2 equation and how $X_{iT}$ is determined for the second order recurrence.

Fig. 5D shows the generalised formula representation for determining the values of C in phase 3 for the second order recurrence.

Fig. 5E shows the generalised formula representation for determining the values of k in phase 4 in the second order linear recurrence.

Fig. 5F shows the generalised representation for the phase 5 calculation of the final linear recurrence variable solutions in a second order linear recurrence.

Fig. 6 shows certain of the generalised representations of an Mth order linear recurrence equation for phases 1 through 5.

Fig. 7 diagrammatically illustrates a pair of parallel vector processing elements and the movement of data within said elements as they process data in groups 1-3 and 4-6 (not shown) of Fig. 4A.

Fig. 8 demonstrates the use of a pair of parallel vector processing elements to calculate phase 3 values of C using the linear recurrence dispersal technique to solve the recurrence of Fig. 4A.

Fig. 9 shows a diagrammatic illustration of a parallel data processing system with a main storage and processor units 1 through N, each shown with respective cache memory.

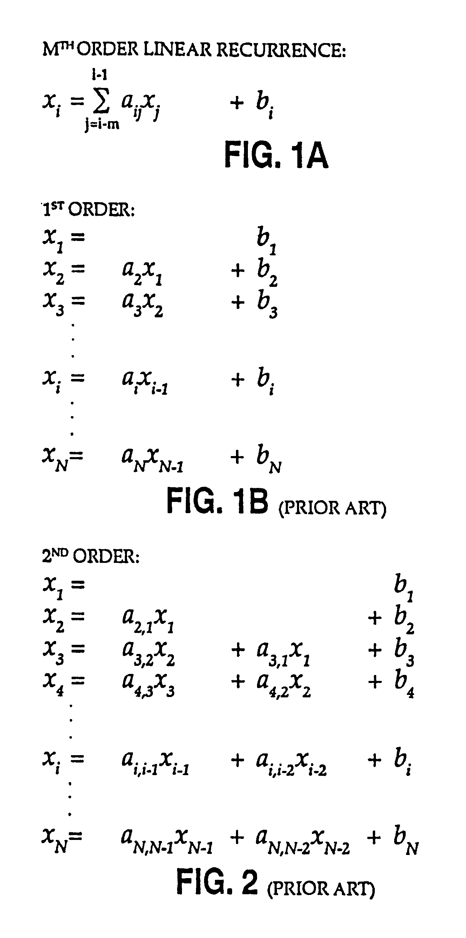

Referring now to the drawings, Fig. 1A shows the generalised depiction of an Mth order linear recurrence, wherein the solutions to equations $x_1$ through xN are desired. As best shown in Fig. 1B, it has heretofore been necessary, in order to calculate solutions to the $X_i$ variables sometimes referred to hereinafter as recurrence variables, to solve the successive equations by calculating $X_1$, then plugging the value of $X_1$ into the $X_2$ equation, then plugging the derived $X_2$ value into the $X_3$ equation, and so on in scalar fashion. Because a solution for the next succeeding equation cannot be calculated before the previous equations have been solved, the prior art technique is very time consuming. Equations are shown in generalised and fragmentary form because of their significant complexity.

Fig. 2 depicts a second order linear recurrence shown as N equations. Such recurrences have heretofore also been solved by the less efficient method described with respect to Fig. 1B above.

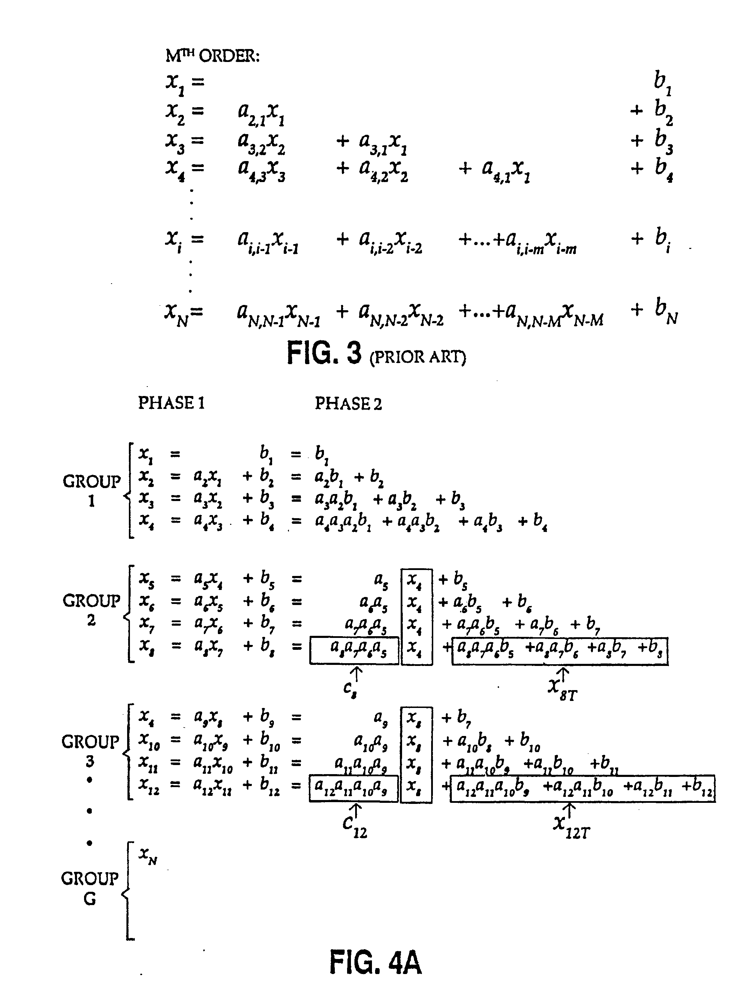

Fig. 3 shows the generalised depiction of an Mth order linear recurrence broken into N equations. For any order linear recurrence, the solution is time consuming when performed using the prior art scalar solution technique.

Before describing the linear recurrence dispersal method of the present invention, a brief description of the data processing environment within which it may be practised will be given. The method may be practised in a uniprocessor or parallel processor system, obviously with significant performance differences. In either type system, stride S addressing capabilities and vector processing elements will significantly enhance performance.

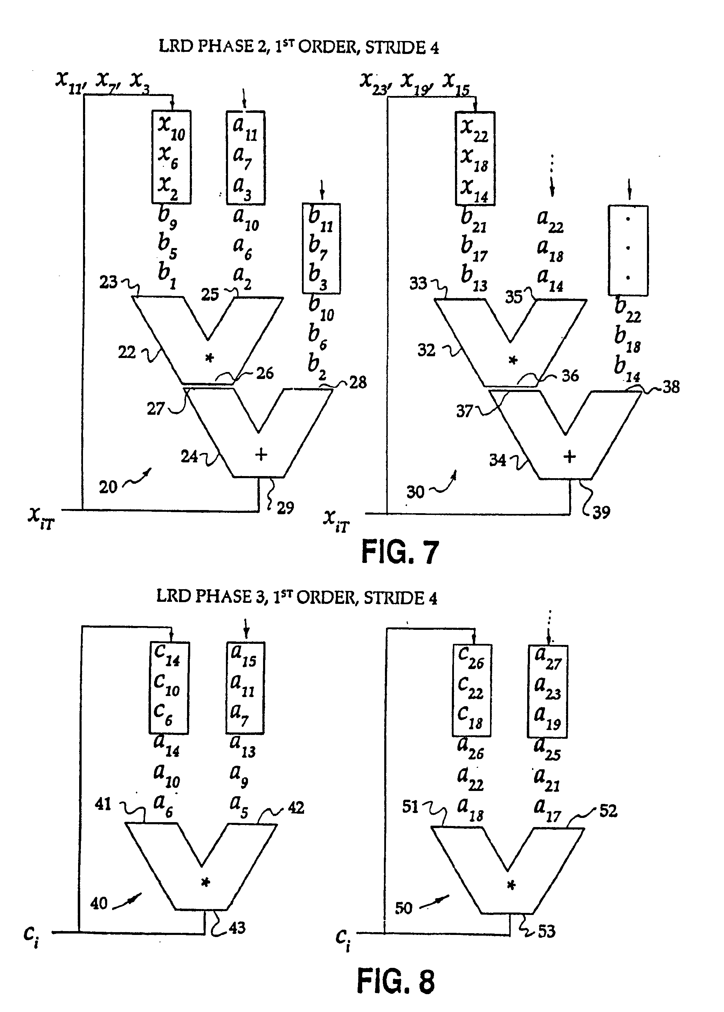

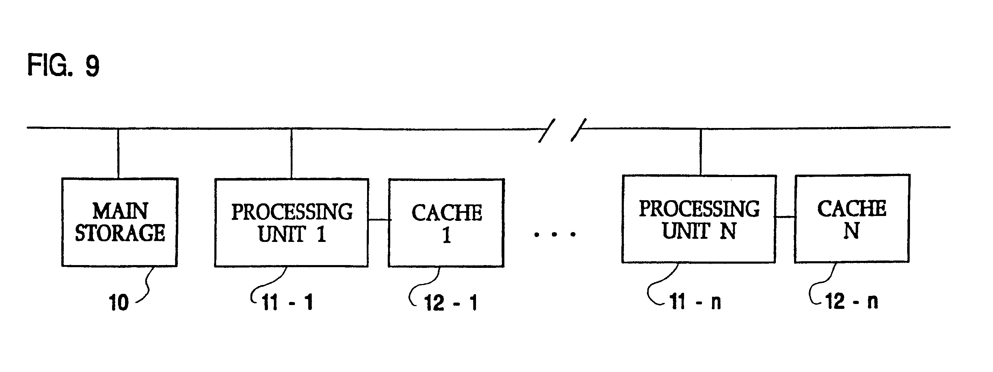

Thus, Fig. 9 diagrammatically illustrates a preferred embodiment, a parallel processing system with a main storage 10 and a plurality of processing units 11-1 to 11-n, each shown with respective cache memory 12-1 to 12-n. The processing units 11 can, in a preferred embodiment, perform complex vector processing and each processing unit such as 11-1 may have multiple processing elements such as 20, 30, 40 and 50 shown in Figs. 7 and 8. Various processing units and their vector processing elements may be assigned various phase 1-5 tasks under program control in a well known manner.

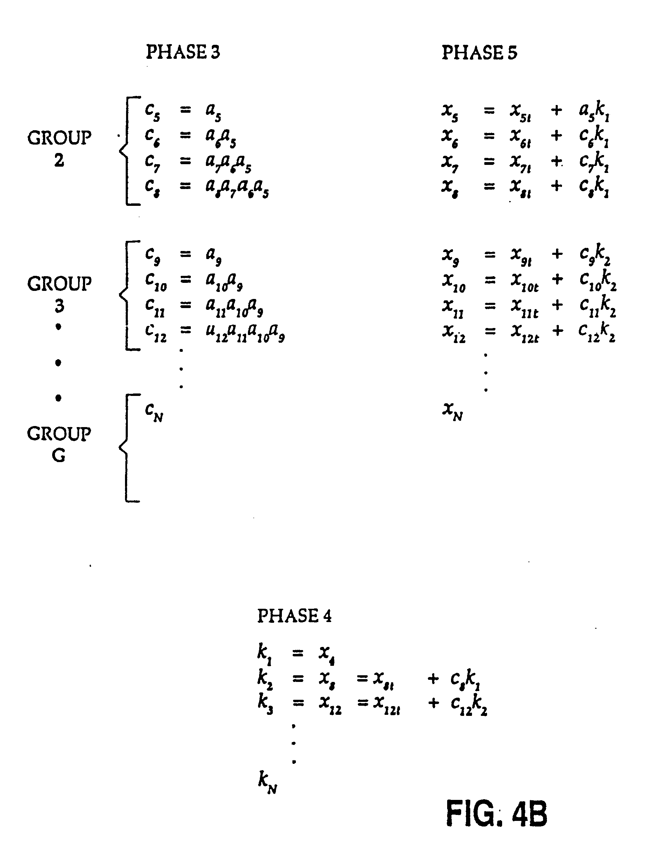

Figs. 4A and 4B show the Phase 1-5 steps of the first order linear recurrence dispersal method of the present improvement. In phase 1 the N equations which comprise the recurrence are broken up into G groups of, in the instant embodiment, but not by way of limitation, four equations per group. A substantial savings in computation time is realised by the use of plural parallel processor elements, each possessing vector processing capabilities.

In the preferred embodiment, the plurality of vector processor elements will concurrently perform calculations for a number of groups of equations. The computation time will vary with the number of processors used.

As will be seen below with respect to Fig. 7, phase 2 calculations will be made across groups, e.g. $x_1$, $x_5$, $x_9$, $x_2$, $x_6$, $x_{10}$, $x_3$ etc. in one processing element in the preferred embodiment. The result of this sequence is that $x_4$ is not solved when the first (temporary) calculation of $x_5$ is performed. This sequence is referred to herein as stride 4 addressing.

According to the instant invention, the linear recurrence variables in the set of equations which define a linear recurrence of any order are calculated by the following five step process:

(a) dividing said set of equations into groups of consecutive equations;

(b) determining (calculating) temporary values, for each group, of the recurrence variables, with those recurrence variables which are derived from equations in the next preceding group being set to zero (it being assumed that their value is unknown at the time of the calculation);

3

(c) determining, for each equation, values of coefficients for those recurrence variables which were set to zero;

(d) determining the final values of said recurrence variables which were set to zero; and

(e) determining the final values of previously unsolved recurrence variables.

For purposes of this disclosure, the steps (a) through (e) shall correspond to phases 1 through 5, respectively.

Referring to phase 1 (Fig. 4A), all N equations are broken up into G groups, each group having, preferably, an equal number of equations per group (e.g., 4). Referring to phase 2 (Fig. 4A) the solution of the group 1 equations is straightforward in the preferred embodiment because the sequence of calculations $(x_1, x_5, x_9, x_2 ...)$ permits $x_1$ to have been solved and available for solving $x_2$ during phase 2. However, in groups 2 through G, the $x_{L-1}$ to $x_{L-m}$ recurrence variables that. appear on the right side of the equal sign in phase 1 of that group are set equal to zero because they are unknown during phase 2. For example, in phase 2, group 2, $x_4$ is temporarily set equal to zero because it appears in the preceding group (group 1), is unknown, and also appears in the group under consideration (group 2). This step yields a temporary or "partial" value of the recurrence variables in group 2, phase 2. This process is carried out through all groups 2-G. For example, the "temporary" value of $x_8$, shown in group 2, and designated "$X_{8T}$" is:

$$a_8 \, a_7 \, a_6 \, b_5 + a_8 \, a_7 \, b_6 + a_8 \, b_7 + b_8$$

because $x_4$ is temporarily set equal to zero, nullifying the coefficient of $x_4$ in group 2, phase 2. For purposes of explanation, the temporary value of $x_5$ in group 2, phase 2, designated $x_{5T}$, is $b_5$. Similarly, the temporary value of $x_6$, designated $x_{6T}$, becomes:

$$a_6 \, b_5 + b_6$$

The temporary value $(X_{7T})$ for $x_7$ is therefore:

$$a_7 \, a_6 \, b_5 + a_7 \, b_6 + b_7$$

Therefore, it can be seen that in step (b), or phase 2, arithmetic calculations are carried out wherein a temporary or "partial" value is given to each $x_i$ because of the error caused by artificially setting variables to 0. That is, by assigning a temporary value of zero to the recurrence variable (or variables, for second or greater order recurrences) which appears on the right side but not on the left side of the equal sign in that group, an $x_{iT}$, or temporary recurrence value is obtained to be used in the calculations of phases 4 and 5. The approximation resulting from the step of setting certain values momentarily equal to zero to calculate temporary values of the recurrence variables is carried out preferably by parallel processor element using stride 4 addressing in Fig. 7. Solutions in one group will later be used in calculations with solutions from the other groups, but are not presently known to each other. The results of the phase 2 calculations in each of the processor elements can be put in general purpose registers and/or in the cache memory 11-1 or main store 10 shown in Fig. 9, i.e., the temporary values given to each $x_{iT}$ in groups 2 through g and the actual values of $x_1$ through $x_4$ calculated in group 1.

In step (c), or phase 3 (Fig. 4B), the coefficients C which correspond to the recurrence variables, which were set equal to zero in phase 2 (Fig. 4A), are developed, in general M per equation for groups 2 through G, and it can be done concurrently with step (b). The process can also be vectorized as shown in Fig. 8 with stride 4 addressing across groups. Note that the stride 4 addressing is across different groups in Figs. 7 and 8.

As seen in Fig. 4B, in phase 4, the final values $k_i$ of the recurrence variables which were set to zero in phase 2 are computed in sequence. This is the one phase that requires scalar processing since each computation requires the results of the previous computation; hence it is desirable to keep the number of computations at a minimum for phase 4. In phase 5, the coefficients computed in phase 3 are multiplied by the appropriate constants of phase 4 and the results added to the appropriate temporary recurrence values $x_{iT}$ of phase 2 to yield the final values of the recurrence variables. The groups may be processed in parallel with vector processing elements operated at stride 1.

In phase 1, the total number of equations to be solved are broken into groups of equal numbers of equations. For example, for a group of 1,000 equations, where there are four processors available to carry out calculations, G may be set equal to 4 and the group of 1,000 equations broken up into four groups of 250 equations each. This results in the improved method being substantially less complicated than the original problem.

The approximate speed-up in performance of a computer utilising the improved method and apparatus on a scalar n-way machine is $N/(m+2)$ where m = the order of the linear recurrence and N = the number of processors. Using a stride 1 vector n-way machine, the increase is approximately $n/(m+1)$.

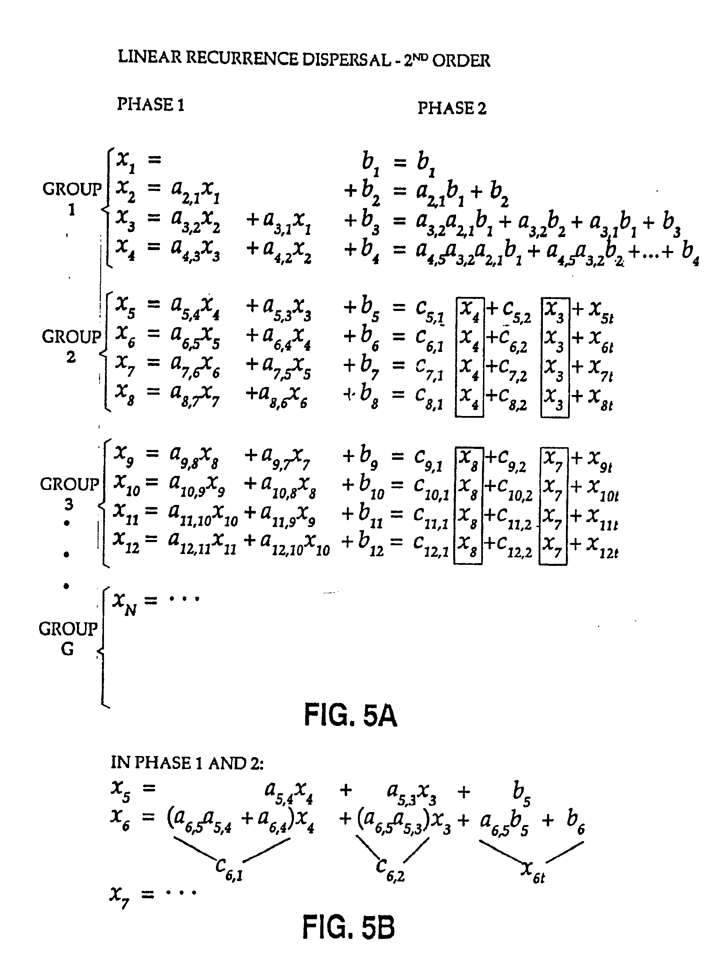

Figs. 5A through 5F depict the linear recurrence dispersal technique disclosed herein carried out on a second order linear recurrence. Fig. 5A shows the breakdown of the N equations of the linear recurrence into G groups in phase 1, and in phase 2 temporary values $x_{iT}$ are calculated for the recurrence variables.

Thereafter, as shown in Fig. 5B, and in a manner analogous to that exemplified above for a first order recurrence, the $C_{ij}$ coefficients corresponding to the recurrence variables temporarily set equal to zero are calculated and it can be appreciated from Fig. 5B that the value of $x_{6T}$ is as follows:

$$a_{6,5} b_5 + b_6$$

because $x_4$ and $x_3$ are temporarily set equal to zero as they appear in the preceding group and on the right side of the equal sign in that group (group 2) but do not appear on the left side of the equal sign in the group under consideration (group 2). It is also to be appreciated from Fig. 5B that the value of $x_{5T}$ equals $b_5$.

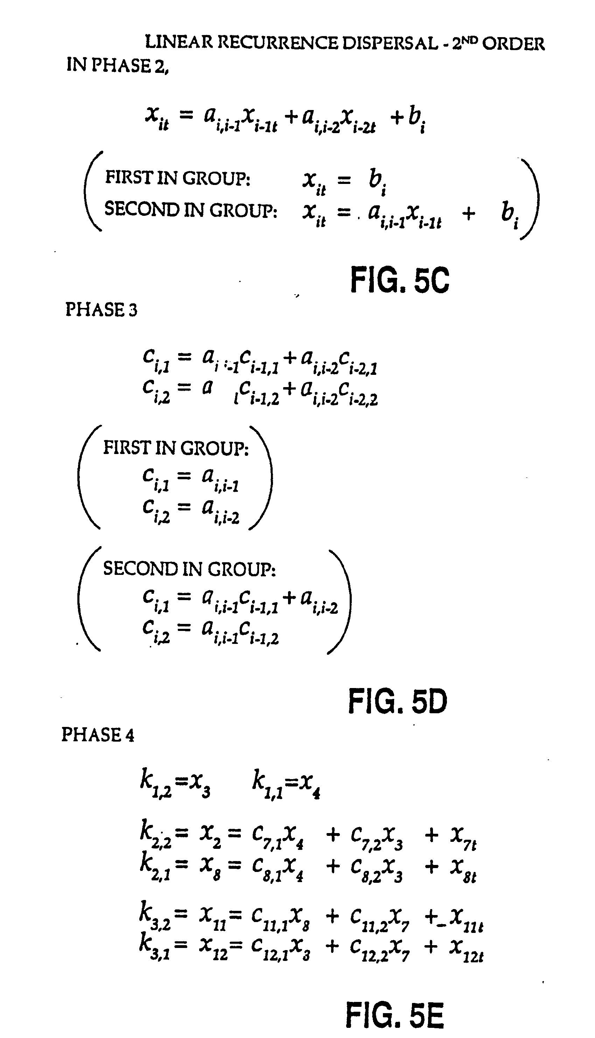

The generalised phase 2 $x_{iT}$ calculation is set forth in Fig. 5C for the second order linear recurrence presently under consideration.

Fig. 5D shows the generalised phase 3 calculation of the C coefficients for a second order linear recurrence. As can be seen in Figs. 5B and 5D, the coefficients of the recurrence variables which were taken as zero in any particular group are represented by the coefficient C.

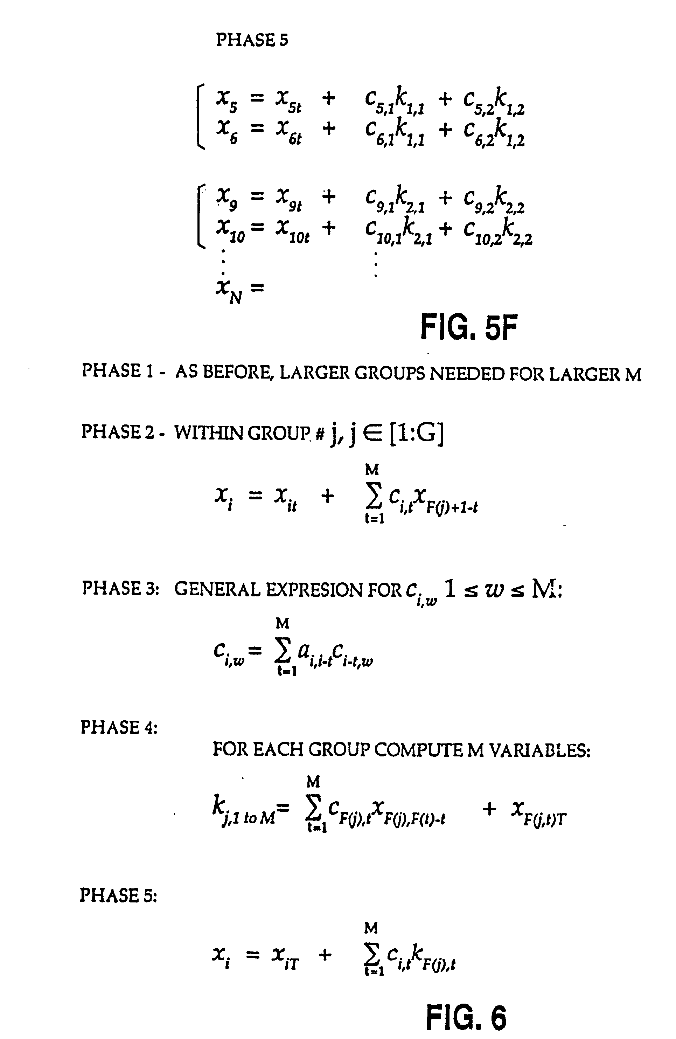

Fig. 5E shows a portion of the phase 4 calculation of the k coefficients for a second order linear recurrence. These coefficients are then utilised in the calculation of the final recurrence variables in phase 5 as depicted in Fig. 5F.

It should be noted that the five steps or phases of the linear recurrence dispersal technique disclosed herein are identical for first, second or Mth order linear recurrences alike; and therefore each calculation step is performed in like manner regardless of the order of the recurrence. It should also be noted that, for any order recurrence, the final values of the group 1 recurrence variables are known at the end of phase 2 and that the recurrence variables in groups 2 through G are dependent upon the values of the recurrence variables in group 1 and require calculation through all five phases to reach solutions. Thus, in the examples shown in Figs. 5A through 5F, equations $x_1$ through $x_4$, comprising group 1, are solved at the end of phase 2, whereas equations $x_5$ through $x_N$ are not solved until phase 5.

The term "stride" as used herein refers to the accessing of memory, wherein each succeeding address value is determined by incrementing by the stride value (e.g. 1 to S). Therefore, stride 1 indicates that each succeeding address is one unit distant from the next preceding address. Likewise, stride S indicates that each succeeding address is S units distant from the next preceding address. A stride S processor can substantially improve performance over a stride 1 processor with faster accessing of data.

Fig. 6 shows the generalised expression for the five steps or phases of the linear recurrence dispersal method for an Mth order equation, which is merely an extension of the first and second order examples set forth in Figs. 4A through 5F. All five steps are carried out in the manner already described.

Fig. 7 shows a diagrammatic representation of a pair of parallel vector processing elements 20 and 30 depicting the movement of data within said elements 20 and 30 for phase 2 calculations required in the first order embodiment of Fig. 4A. As described earlier, in the preferred embodiment, the data processing system on which the linear recurrence dispersal technique is carried out should have effective processing capability such that phases 2 and 3 can be achieved with vector processing and with calculations performed across groups with a stride equal to the number of equations in a group. The output of the vector processing element 20 is the $x_{iT}$ temporary recurrence variable values which are stored temporarily in general purpose registers (not shown) or cache 11-1 of Fig. 9 or main storage.

The multiplier logic element 22 has two inputs 23 and 25 and an output 26 coupled to a first input 27 of addition logic element 24, which element 24 has a second input 28. The output 29 of addition logic element 24 is coupled directly to cache 12 or main storage 10 shown in Fig. 9 and is also coupled to the stream of data connected to input 23 of multiplier logic element 22.

Similarly, multiplier logic element 32 of vector processing element 30 has a pair of inputs 33 and 35 and an output 36 coupled to first input 37 of addition logic element 34, which has a second input port 38. Addition logic element 34 has output port 39 coupled directly to cache memory as well as being connected to the input port 33.

As evidenced by the subscripts on the a and b coefficients entering input ports 23, 25 and 28 of Fig. 7, the stride of the system depicted is 4. That is, the processing element 20 is calculating values for the first three groups of Fig. 4A and the next processing element 30 is calculating values for the second three groups.

Fig. 7 and the table below illustrate a preferred method of executing phase 2 calculations of the first order linear recurrence of Fig. 4A. In a typical vector processing element 20, the result of a multiplication in logic 22 (e.g., $b_1 a_2$) can be added to the appropriate value (e.g. $b_2$) while the next values ($b_5$, $a_6$) are being applied to the inputs 23, 25. This improves system performances.

However, note that the values applied to the inputs 23, 25, 28 (Fig. 7) in succession are found in the equations of next succeeding groups (stride 4), e.g. $x_1$, $x_5$, $x_9$, $x_2$, $x_6$ ... rather than succeeding equations of the same group (stride 1). If equations of the same group were processed in order (stride 1), then for example the results of the calculation of $x_2$ would not be available at the input 23 (Fig. 7) when the calculation of $x_3$ is initiated. Depending upon the hardware of the system, stride 1 processing would necessitate the processing element 20 being rendered inactive until the $x_2$ calculation is complete and the value of $x_2$ being fed directly to the input 23 or put in a general purpose register which register is then accessed to provide the value of $x_1$ to the input 23. In addition, the application of $x_2$ to the input 23 must be coordinated with the application of values $a_3$ and $b_3$ to respective inputs 25, 28. Thus one or more cycles of operating time are lost to the processing element 20 if stride 1 processing is used.

To avoid this system inefficiency, stride S (in Fig. 7 stride 4) addressing is used in a preferred embodiment to access $b_1$, then $b_5$, $b_9$ ... etc. This is illustrated in greater detail in the following table for the first three groups of equations:

| CYCLE | VARIABLE | RESULTS OF CALCULATION | |
|---|---|---|---|
| 1 | $x_1$ | $=b_1$ | |
| 2 | $x_{5T}$ | $=0 + b_5$ | |
| 3 | $x_{9T}$ | $=0 + b_9$ | |
| 4 | $x_2$ | $=a_2 x_1 + b_2$ | where $x_1=b_1$ |
| 5 | $x_{6T}$ | $=0 + a_6 x_{5T} + b_6$ | $x_{5T}=b_5$ |
| 6 | $x_{10T}$ | $=0 + a_{10} x9_T + b_{10}$ | $x_{9T}=b_9$ |
| 7 | $x_3$ | $=a_3 x_2 + b_3$ | $x_2=a_2 b_1 + b_2$ |
| 8 | $x_{7T}$ | $=0 + a_7 x_{6T} + b_7$ | $x_{6T}=a_6 b_5 + b_6$ |
| 9 | $x_{11T}$ | $=0 + a_{11} x_{10T} + b_{11}$ | $x_{10T}=a_{10} b_9 + b_{10}$ |
| 10 | $x_4$ | $=a_4 x_3 + b_4$ | $x_3=a_3 a_2 b_1 + a_3 b_2 + b_3$ |
| 11 | $x_{8T}$ | $=0 + a_8 x_{7T} + b_8$ | $x_{7T}=a_7 a_6 b_5 + a_7 a_6 + b_7$ |
| 12 | $x_{12T}$ | $=0 + a_{12} x_{11T} + b_{12}$ | $x_{11T}=a_{11} a_{10} b_9 + a_{11} b_{10} + b_{11}$ |

It can be seen from the table that there is no processing element delay. For example, each variable (e.g. $x_2$) is calculated three cycle times after its preceding variables ($x_1$) is calculated; hence $x_1$ is available at the appropriate time for the $x_2$ calculation irrespective of the system characteristics. Although the preferred embodiment shows a stride 4 corresponding to the four (4) equations for group, the invention is not so limited. It is merely important to provide a stride value which does not cause the processing element 20 to wait (miss cycles) for a previous calculation result and/or coefficient before initiating its next calculation cycle.

Fig. 8 shows the use of a vector processing element 40, which in the case shown is a multiplier logic element, to calculate the phase 3 values of Ci using the linear recurrence dispersal technique on the first order recurrence of Figs. 4A, 4B. The multiplier logic element 40 has a pair of input ports 41 and 42 and an output port 43, which output port 43 is connected to cache memory 12 or main storage 10 shown in Fig. 9. Comparing Fig. 8 to Fig. 4B, phase 3, it can be seen that coefficients $a_6$ and $a_5$ are about to be input into ports 41 and 42 of multiplier logic element 40, respectively. Therefore, the output therefrom will be a value of $C_6$. Likewise, the next pair of coefficients, $a_{10}$ and $a_9$, to be multiplied by multiplier logic element 40 will yield a product designated as $C_{10}$ in the next succeeding group. Thus, it can be seen that the stride of the system is four allowing a single processor to calculate across a plurality of groups (2, 3 and 4). It can thus be appreciated that the next succeeding operation will multiply coefficients $a_{14}$ and $a_{13}$, the result of which will be designated as $C_{14}$, the value produced in group 3 (not shown).

It will also be appreciated that certain special cases exist wherein less calculation is required. For example, where the $a_{ij}$ coefficient are all constant (i.e., where $a_{ij} = a$) the phase 3 computations no longer make up a significant portion of the solution because they are performed only once for the second and succeeding groups.

Another example exists where the $a_{ij}$ coefficients all equal one. The phase 3 computations do not need to be performed for first order and there is significant reduction in calculations for other orders.

A third example of a special case exists where the $a_{ij}$ coefficients equal $a_{i + t,j}$, or periodic coefficient, wherein the phase 3 computations need not be a significant portion of the solution if the group size is chosen appropriately.

It will be appreciated that practice of the invention requires the use of the five phases described above. However, it will be appreciated that the manner of executing at least certain phases will depend upon the hardware and software available. That is, execution of certain phases will depend upon the availability of: (1) stride 1 to stride S addressing, (2) the number of processors and (3) whether the system being used has vector processing capability.

The instant invention has been shown and described herein in what it is considered to be the most practical and preferred embodiment. It is recognised, however, that departures may be made therefrom within the scope of the invention and that obvious modifications will occur to a person skilled in the art.

## Claims

1. A method of operating a data processing system to determine the values of recurrence variables in a set of equations which define a linear recurrence of any order comprising the steps of
   (a) operating the processing system under program control to divide said set of equations into groups of consecutive equations,
   (b) operating at least one processor element of the system to determine temporary values, for each group, of the recurrence variables with those recurrence variables which are derived from equations in the next proceeding group being set to zero,
   (c) operating at least one processor element to determine for each equation values of the coefficients for those recurrence variables which were set to zero,
   (d) operating at least one processor element to determine the final value of said recurrence variables which were set to zero,
   (e) operating at least one processor element to determine the final values of previously unsolved recurrence variables, and
   (f) storing each of the determined values in system memory after each respective determining step.

2. A method as claimed in claim 1 wherein the temporary value determinations for certain of the groups are performed concurrently with temporary value determinations of other groups by plural processor elements operated in parallel.

3. A method as claimed in claim 1 or claim 2 wherein certain of said coefficient value determinations are performed concurrently with other coefficient value determinations by a plurality of processor elements operated in parallel.

4. A method as claimed in any of claims 1 to 3 wherein certain of said final value determinations are performed concurrently with other final value determinations by a plurality of processor elements operated in parallel.

5. A method as claimed in any preceding claim wherein at least certain of the groups of consecutive equations are arranged by the processing system under program control in subsets of consecutive groups of consecutive equations, and
   wherein the processing system is operated stride S for performing said temporary value determinations of each subset of groups in a sequence in which the temporary values of the first equations in each group of the subset are calculated in sequence by a processor element of the system followed by the temporary values of the second, then the remaining in sequence, equations in each group of the subset being calculated by the same processor element.

6. A method as claimed in claim 5, wherein S is the number of equations in a group.

7. A method as claimed in claim 1 wherein at least certain of the groups of consecutive equations are arranged by the processing system in subsets of consecutive groups of consecutive equations, and
   wherein said coefficient value determinations for each of said subsets are performed by a processor element in a sequence in which the coefficient values of the first equations in each group of the subset are calculated in sequence followed by the coefficient values of the second, then the remaining, in sequence, equations in each group of the subset.

8. A data processing system for determining the values of recurrence variables in a set of sequential recurrence variable equations which define a linear recurrence of any order, said system including a processor adapted under program control to

(a) divide the set of sequential recurrence variable equations into a further plurality of groups of sequential equations;

(b) solve, for each said group, sub-recurrence subsets, with recurrence variables appearing but not defined in each said group being taken as zero;

(c) develop coefficients for each equation in each said group as a function of the recurrence variable coefficients of previous equations of said group with external coefficients taken as zero;

(d) compute, in sequence, final values of said recurrence variables which were taken as zero;

(e) multiply a recurrence variable so computed by a coefficient so developed and add the product to a corresponding sub-recurrence value from said subconcurrence subsets.

9. A data processing system as claimed in claim 8, having a plurality of processor elements adapted to cooperate with memory means for performing concurrent operations on data, further adapted under program control to operate at least certain of said plurality of processor element sin parallel to determine temporary values of the recurrence variables of the groups of equations with those recurrence variables which are derived from equations in a next preceding group being set to determine to zero, to operate at least certain of said plurality of processor elements in parallel to determine the final values of previously unsolved recurrence variables; and to store, in the memory means, each of the determined values as it is developed.

10. A data processing system as claimed in claim 9 wherein at least certain of said processor elements are vector processing elements for more rapid solution of the equations.

11. A data processing system as claimed in claim 10 wherein at least certain of the groups of consecutive equations are arranged by the processing system under program control in subsets of consecutive groups of consecutive equations, and wherein said temporary value determinations of each subset of groups is performed by a selected one of the processing elements, operated stride S, in a sequence in which the temporary values of the first equations in each group of the subset are calculated in sequence followed by the temporary values of the second, then the following, equations in each group of the subset.

12. A data processing system as claimed in claim 11 wherein at least certain of said vector processing elements perform the temporary value determinations of at least certain of said subsets concurrently with each other.

13. A data processing system as claimed in claim 10, wherein at least certain of the groups of consecutive equations are arranged by the processing system under program control in subsets of consecutive groups of consecutive equations, and wherein said coefficient value determinations for each of said subsets is performed by a selected one of the processing elements in a sequence in which the coefficient values of the first equations in each group of the subset are calculated in sequence followed by the coefficient values of the second, then the remaining, in sequence, equations in each group of the subset.

14. A data processing system as claimed in claim 1, wherein said coefficient value determinations of certain of said subsets are performed concurrently with each other by certain of said vector processing elements operated in parallel under program control.

M$^{TH}$ ORDER LINEAR RECURRENCE:

$$x_i = \sum_{j=i-m}^{i-1} a_{ij} x_j \qquad + b_i$$

# FIG. 1A

1$^{ST}$ ORDER:

$$x_1 = \qquad\qquad b_1$$
$$x_2 = \quad a_2 x_1 \qquad + b_2$$
$$x_3 = \quad a_3 x_2 \qquad + b_3$$
$$\vdots$$
$$x_i = \quad a_i x_{i-1} \qquad + b_i$$
$$\vdots$$
$$x_N = \quad a_N x_{N-1} \qquad + b_N$$

# FIG. 1B (PRIOR ART)

2$^{ND}$ ORDER:

$$x_1 = \qquad\qquad\qquad\qquad b_1$$
$$x_2 = \quad a_{2,1} x_1 \qquad\qquad\qquad + b_2$$
$$x_3 = \quad a_{3,2} x_2 \qquad + a_{3,1} x_1 \qquad + b_3$$
$$x_4 = \quad a_{4,3} x_3 \qquad + a_{4,2} x_2 \qquad + b_4$$
$$\vdots$$
$$x_i = \quad a_{i,i-1} x_{i-1} \qquad + a_{i,i-2} x_{i-2} \qquad + b_i$$
$$\vdots$$
$$x_N = \quad a_{N,N-1} x_{N-1} + a_{N,N-2} x_{N-2} + b_N$$

# FIG. 2 (PRIOR ART)

$M^{TH}$ ORDER:

$$x_1 = \qquad\qquad\qquad\qquad\qquad\qquad\qquad\qquad b_1$$
$$x_2 = a_{2,1}x_1 \qquad\qquad\qquad\qquad\qquad\qquad + b_2$$
$$x_3 = a_{3,2}x_2 \qquad + a_{3,1}x_1 \qquad\qquad\qquad + b_3$$
$$x_4 = a_{4,3}x_3 \qquad + a_{4,2}x_2 \qquad + a_{4,1}x_1 \qquad + b_4$$
$$\vdots$$
$$x_i = a_{i,i-1}x_{i-1} \qquad + a_{i,i-2}x_{i-2} \qquad + \ldots + a_{i,i-m}x_{i-m} \qquad + b_i$$
$$\vdots$$
$$x_N = a_{N,N-1}x_{N-1} \qquad + a_{N,N-2}x_{N-2} \qquad + \ldots + a_{N,N-M}x_{N-M} \qquad + b_N$$

## FIG. 3 (PRIOR ART)

PHASE 1          PHASE 2

GROUP 1
$$x_1 = \qquad\qquad b_1 = b_1$$
$$x_2 = a_2 x_1 + b_2 = a_2 b_1 + b_2$$
$$x_3 = a_3 x_2 + b_3 = a_3 a_2 b_1 + a_3 b_2 + b_3$$
$$x_4 = a_4 x_3 + b_4 = a_4 a_3 a_2 b_1 + a_4 a_3 b_2 + a_4 b_3 + b_4$$

GROUP 2
$$x_5 = a_5 x_4 + b_5 = a_5 \boxed{x_4} + b_5$$
$$x_6 = a_6 x_5 + b_6 = a_6 a_5 \boxed{x_4} + a_6 b_5 + b_6$$
$$x_7 = a_7 x_6 + b_7 = a_7 a_6 a_5 \boxed{x_4} + a_7 a_6 b_5 + a_7 b_6 + b_7$$
$$x_8 = a_8 x_7 + b_8 = \boxed{a_8 a_7 a_6 a_5} \boxed{x_4} + \boxed{a_8 a_7 a_6 b_5 + a_8 a_7 b_6 + a_8 b_7 + b_8}$$
$$\underset{c_8}{\uparrow} \qquad\qquad\qquad \underset{x_{8T}}{\uparrow}$$

GROUP 3
$$x_9 = a_9 x_8 + b_9 = a_9 \boxed{x_8} + b_7$$
$$x_{10} = a_{10} x_9 + b_{10} = a_{10} a_9 \boxed{x_8} + a_{10} b_8 + b_{10}$$
$$x_{11} = a_{11} x_{10} + b_{11} = a_{11} a_{10} a_9 \boxed{x_8} + a_{11} a_{10} b_9 + a_{11} b_{10} + b_{11}$$
$$x_{12} = a_{12} x_{11} + b_{12} = \boxed{a_{12} a_{11} a_{10} a_9} \boxed{x_8} + \boxed{a_{12} a_{11} a_{10} b_9 + a_{12} a_{11} b_{10} + a_{12} b_{11} + b_{12}}$$
$$\underset{c_{12}}{\uparrow} \qquad\qquad\qquad \underset{x_{12T}}{\uparrow}$$

$$\vdots$$

GROUP G
$$x_N$$

## FIG. 4A

PHASE 3

GROUP 2
$$\begin{cases} c_5 = a_5 \\ c_6 = a_6 a_5 \\ c_7 = a_7 a_6 a_5 \\ c_8 = a_8 a_7 a_6 a_5 \end{cases}$$

GROUP 3
$$\begin{cases} c_9 = a_9 \\ c_{10} = a_{10} a_9 \\ c_{11} = a_{11} a_{10} a_9 \\ c_{12} = u_{12} a_{11} a_{10} a_9 \end{cases}$$
$\cdot$
$\cdot$
$\cdot$

GROUP G
$$\begin{cases} c_N \end{cases}$$

PHASE 5

$$x_5 = x_{5t} + a_5 k_1$$
$$x_6 = x_{6t} + c_6 k_1$$
$$x_7 = x_{7t} + c_7 k_1$$
$$x_8 = x_{8t} + c_8 k_1$$

$$x_9 = x_{9t} + c_9 k_2$$
$$x_{10} = x_{10t} + c_{10} k_2$$
$$x_{11} = x_{11t} + c_{11} k_2$$
$$x_{12} = x_{12t} + c_{12} k_2$$
$\cdot$
$\cdot$
$\cdot$

$$x_N$$

PHASE 4

$$k_1 = x_4$$
$$k_2 = x_8 = x_{8t} + c_8 k_1$$
$$k_3 = x_{12} = x_{12t} + c_{12} k_2$$
$\cdot$
$\cdot$
$\cdot$
$$k_N$$

# FIG. 4B

LINEAR RECURRENCE DISPERSAL - 2$^{ND}$ ORDER

PHASE 1               PHASE 2

$$
\text{GROUP 1}\begin{cases}
x_1 = & & & b_1 = b_1 \\
x_2 = a_{2,1}x_1 & & +b_2 = a_{2,1}b_1 + b_2 \\
x_3 = a_{3,2}x_2 & +a_{3,1}x_1 & +b_3 = a_{3,2}a_{2,1}b_1 + a_{3,2}b_2 + a_{3,1}b_1 + b_3 \\
x_4 = a_{4,3}x_3 & +a_{4,2}x_2 & +b_4 = a_{4,5}a_{3,2}a_{2,1}b_1 + a_{4,5}a_{3,2}b_2 + \ldots + b_4
\end{cases}
$$

$$
\text{GROUP 2}\begin{cases}
x_5 = a_{5,4}x_4 & +a_{5,3}x_3 & +b_5 = c_{5,1}\boxed{x_4} + c_{5,2}\boxed{x_3} + x_{5t} \\
x_6 = a_{6,5}x_5 & +a_{6,4}x_4 & +b_6 = c_{6,1}\boxed{x_4} + c_{6,2}\boxed{x_3} + x_{6t} \\
x_7 = a_{7,6}x_6 & +a_{7,5}x_5 & +b_7 = c_{7,1}\boxed{x_4} + c_{7,2}\boxed{x_3} + x_{7t} \\
x_8 = a_{8,7}x_7 & +a_{8,6}x_6 & +b_8 = c_{8,1}\boxed{x_4} + c_{8,2}\boxed{x_3} + x_{8t}
\end{cases}
$$

$$
\text{GROUP 3}\begin{cases}
x_9 = a_{9,8}x_8 & +a_{9,7}x_7 & +b_9 = c_{9,1}\boxed{x_8} + c_{9,2}\boxed{x_7} + x_{9t} \\
x_{10} = a_{10,9}x_9 & +a_{10,8}x_8 & +b_{10} = c_{10,1}\boxed{x_8} + c_{10,2}\boxed{x_7} + x_{10t} \\
x_{11} = a_{11,10}x_{10} & +a_{11,9}x_9 & +b_{11} = c_{11,1}\boxed{x_8} + c_{11,2}\boxed{x_7} + x_{11t} \\
x_{12} = a_{12,11}x_{11} & +a_{12,10}x_{10} & +b_{12} = c_{12,1}\boxed{x_8} + c_{12,2}\boxed{x_7} + x_{12t}
\end{cases}
$$

$$
\text{GROUP G}\begin{cases}
x_N = \cdots
\end{cases}
$$

## FIG. 5A

IN PHASE 1 AND 2:

$$
x_5 = \quad a_{5,4}x_4 \quad + \quad a_{5,3}x_3 \quad + \quad b_5
$$
$$
x_6 = \underbrace{(a_{6,5}a_{5,4} + a_{6,4})}_{c_{6,1}}x_4 + \underbrace{(a_{6,5}a_{5,3})}_{c_{6,2}}x_3 + \underbrace{a_{6,5}b_5 + b_6}_{x_{6t}}
$$
$$
x_7 = \cdots
$$

## FIG. 5B

LINEAR RECURRENCE DISPERSAL - 2^{ND} ORDER
IN PHASE 2,

$$x_{it} = a_{i,i-1}x_{i-1t} + a_{i,i-2}x_{i-2t} + b_i$$

$$\left( \begin{array}{l} \text{FIRST IN GROUP:} \quad x_{it} = b_i \\ \text{SECOND IN GROUP:} \quad x_{it} = a_{i,i-1}x_{i-1t} + b_i \end{array} \right)$$

## FIG. 5C

PHASE 3

$$c_{i,1} = a_{i,i-1}c_{i-1,1} + a_{i,i-2}c_{i-2,1}$$
$$c_{i,2} = a_{i,i-1}c_{i-1,2} + a_{i,i-2}c_{i-2,2}$$

$$\left( \begin{array}{l} \text{FIRST IN GROUP:} \\ c_{i,1} = a_{i,i-1} \\ c_{i,2} = a_{i,i-2} \end{array} \right)$$

$$\left( \begin{array}{l} \text{SECOND IN GROUP:} \\ c_{i,1} = a_{i,i-1}c_{i-1,1} + a_{i,i-2} \\ c_{i,2} = a_{i,i-1}c_{i-1,2} \end{array} \right)$$

## FIG. 5D

PHASE 4

$$k_{1,2} = x_3 \qquad k_{1,1} = x_4$$

$$k_{2,2} = x_2 = c_{7,1}x_4 + c_{7,2}x_3 + x_{7t}$$
$$k_{2,1} = x_8 = c_{8,1}x_4 + c_{8,2}x_3 + x_{8t}$$

$$k_{3,2} = x_{11} = c_{11,1}x_8 + c_{11,2}x_7 + x_{11t}$$
$$k_{3,1} = x_{12} = c_{12,1}x_3 + c_{12,2}x_7 + x_{12t}$$

## FIG. 5E

PHASE 5

$$\begin{bmatrix} x_5 = x_{5t} + c_{5,1}k_{1,1} + c_{5,2}k_{1,2} \\ x_6 = x_{6t} + c_{6,1}k_{1,1} + c_{6,2}k_{1,2} \end{bmatrix}$$

$$\begin{bmatrix} x_9 = x_{9t} + c_{9,1}k_{2,1} + c_{9,2}k_{2,2} \\ x_{10} = x_{10t} + c_{10,1}k_{2,1} + c_{10,2}k_{2,2} \\ \vdots \qquad\qquad \vdots \\ x_N = \end{bmatrix}$$

# FIG. 5F

PHASE 1 - AS BEFORE, LARGER GROUPS NEEDED FOR LARGER M

PHASE 2 - WITHIN GROUP # $j$, $j \in [1:G]$

$$x_i = x_{it} + \sum_{t=1}^{M} c_{i,t} x_{F(j)+1-t}$$

PHASE 3: GENERAL EXPRESION FOR $c_{i,w}$ $1 \le w \le M$:

$$c_{i,w} = \sum_{t=1}^{M} a_{i,i-t} c_{i-t,w}$$

PHASE 4:

FOR EACH GROUP COMPUTE M VARIABLES:

$$k_{j,1\ to\ M} = \sum_{t=1}^{M} c_{F(j),t} x_{F(j),F(t)-t} + x_{F(j,t)T}$$

PHASE 5:

$$x_i = x_{iT} + \sum_{t=1}^{M} c_{i,t} k_{F(j),t}$$

# FIG. 6

14

LRD PHASE 2, 1ST ORDER, STRIDE 4

FIG. 7

LRD PHASE 3, 1ST ORDER, STRIDE 4

FIG. 8

FIG. 9

| MAIN STORAGE | PROCESSING UNIT 1 | CACHE 1 | . . . | PROCESSING UNIT N | CACHE N |

10  11 - 1  12 - 1  11 - n  12 - n

EP 0 444 847 A2